# EUROPEAN PATENT APPLICATION

(11) **EP 2 362 577 A1**
(43) Date of publication of application: **31.08.2011**
(21) Application number: 10154376.7
(22) Date of filing: 23.02.2010
(51) Int. Cl.: H04L 12/24, G01D 4/00, G01R 19/00

(54) **Analysing communication configuration in a process control system**

(71) Applicant: ABB Technology AG, 8050 Zürich (CH)
(72) Inventor: Obrist, Michael, 5400, Baden (CH); Tetsuji, Maeda, 6340, Baar (CH); Wimmer, Wolfgang, 5323, Rietheim (CH)
(74) Representative: ABB Patent Attorneys

(57) **Abstract**

According to the present invention, every network message configured for transmission from a sender to a receiver IED across an Ethernet switch-based communication network of a PC or SA system is evaluated, and a graphical representation respective of process related operational aspects of each IED involved is generated and displayed. From a logical data flow description that is part of a formal configuration representation of the PC or SA system, sender and receiver IEDs are retrieved or determined. Likewise, a single one out of a plurality of operational aspect of the process is retrieved for each IED from the formal configuration description. Generating the graphical representation of the system includes forming groups of IEDs with identical operational aspects. For each group of IEDs, the respective operational aspect is indicated or displayed, in the form of a label or tag, along with, or otherwise linked to, the group. As a consequence, a user may easily analyse the communication configuration of the system by looking at the generated graphical representation and determine, at a single glance, the consequences of IED failures or engineering errors on other IEDs and/or on the controlled and protected process.

## Description

### FIELD OF THE INVENTION

The invention relates to the field of process control systems for controlling large-scale industrial processes, and in particular to Substation Automation systems for operating substations in high and medium-voltage power networks.

### BACKGROUND OF THE INVENTION

Process control or industrial automation systems are used extensively to protect, control and monitor industrial processes in industrial plants for e.g. manufacturing goods, transforming substances, or generating power, as well as to monitor and control distributed primary systems like electric power, water or gas supply systems or telecommunication systems, including their respective substations. An industrial automation system generally has a large number of process controllers distributed in an industrial plant or over a distributed primary system, and communicatively interconnected via a communication system.

Substations in high and medium-voltage power networks include primary devices such as electrical cables, lines, bus bars, switches, power transformers and instrument transformers, which are generally arranged in switch yards and/or bays. These primary devices are operated in an automated way via a Substation Automation (SA) system. The SA system comprises secondary devices, so-called Intelligent Electronic Devices (IED), responsible for protection, control and monitoring of the primary devices. The IEDs may be assigned to hierarchical levels, i.e. the station level, the bay level, and the process level, the latter being separated from the bay level by a so-called process interface. The station level of the SA system includes an Operator Work Station (OWS) with a Human-Machine Interface (HMI) and a gateway to a Network Control Centre (NCC). IEDs on the bay level, also termed bay units, in turn are connected to each other as well as to the IEDs on the station level via an inter-bay or station bus primarily serving the purpose of exchanging commands and status information.

IEDs on the process-level comprise electronic sensors for voltage (VT), current (CT) and gas density measurements, contact probes for sensing switch and transformer tap changer positions, and/or intelligent actuators (I/O) for controlling switchgear like circuit breakers or disconnectors. Exemplary process-level IEDs such as non-conventional current or voltage transformers comprise an Analogue to Digital (AD) converter for sampling of analogue signals. Process-level IEDs are connected to the bay units via a process bus, which can be considered as the process interface replacing the conventional hard-wired process interface. The latter connects conventional current or voltage transformer in the switchyard to the bay level equipment via dedicated copper wires, in which case the analogue signals of the instrument transformers are sampled by the bay units.

A communication standard for communication between the secondary devices of a substation has been introduced by the International Electrotechnical Committee (IEC) as part of the standard IEC 61850 entitled "communication networks and systems in substations". For non-time critical messages, IEC 61850-8-1 specifies the Manufacturing Message Specification (MMS, ISO/IEC 9506) protocol based on a reduced Open Systems Interconnection (OSI) protocol stack with the Transmission Control Protocol (TCP) and Internet Protocol (IP) in the transport and network layer, respectively, and Ethernet as physical media. For time-critical event-based messages, IEC 61850-8-1 specifies the Generic Object Oriented Substation Events (GOOSE) directly on the Ethernet link layer of the communication stack. For very fast periodically changing signals at the process level such as measured analogue voltages or currents IEC 61850-9-2 specifies the Sampled Value (SV) service, which like GOOSE builds directly on the Ethernet link layer. Hence, the standard defines a format to publish, as multicast messages on an industrial Ethernet, event-based messages and digitized measurement data from current or voltage sensors on the process level. SV and GOOSE messages are transmitted over a process bus, which may, particularly in cost-effective medium or low voltage substations, extend to neighbouring bays, i.e. beyond the bay to which the sensor is assigned. In the latter case, the process bus transmits, in addition to the process data, command and/or status related messages otherwise exchanged via a dedicated station bus. In the following, the distinction between process and station bus in SA systems is done away with.

SA systems based on IEC61850 are configured and described by means of a standardized configuration representation or formal system description called Substation Configuration Description (SCD). An SCD file comprises the logical data flow between the IEDs on the basis of message types or data sets, i.e. for every message source, a list of destination or receiver IEDs, the message size in terms of data set definitions, as well as the message sending rates for all periodic traffic like GOOSE, SV and Integrity reports. The SCD file likewise comprises the relation between the IEDs as well as the functionality which the IEDs execute on behalf of the substation process or switch yard.

For large process control systems with increased real time critical communication needs due to multicast communication traversing the entire system and including vertical communication to station level, the communication network load becomes critical. With growing sophistication of distributed functions in the process control systems the amount of real time critical data will rise, and the complexity of message flow and flow dependencies along with it. This is especially true for multicast GOOSE and SV messages according to IEC 61850 in SA systems with switched Ethernet networks, and has an impact on the entire communication system as well as on individual message receivers. In addition, the consistency, completeness and/or correctness of the data flow definitions, particularly in process control systems with up to 500 IEDs communicating among each other, are not easily verified or even visualized. Likewise, it is not easy to anticipate already at engineering time, or to diagnose while the control system is ultimately running, the consequences of engineering errors or IED failures on the controlled and protected process.

Graphical data flow representations in form of function charts have been employed for many years. This kind of presentation can also be used on the level of aggregated functions instead of single function blocks, with the aggregation corresponding to a complete IED. Other means of representing data flow include a signal matrix representation, where e.g. from top to bottom incoming signals are listed, and from left to right signal connection points or outgoing signals, to which the incoming signals are connected by a cross at the appropriate row/column. According to still other ways of representing relations between a set of common objects the latter are arranged along the diagonal of a matrix, and the fields in the appropriate object row/column are used to indicate the relation between the object in the diagonal of the row and that in the diagonal of the column. All of the known data flow representations depict relations between a set of communicating objects or IEDs, but lack any additional connection to the specific parts of the industrial process or the primary system that are served by the IEDs.

In this context, the principles and methods of the following invention are by no means restricted to a use in substation automation, but likewise applicable to other process control systems with a formal system description. In particular, it has to be noted that IEC 61850 is also an accepted standard for Hydro power plants, Wind power systems, and Distributed Energy Resources (DER).

### DESCRIPTION OF THE INVENTION

It is an objective of the invention to facilitate analysis of communication disruption or malfunctions in communication networks of Process Control (PC) or Substation Automation (SA) systems with a plurality of Intelligent Electronic Devices (IEDs). This objective is achieved by a method of analysing a communication configuration and an engineering tool according to the independent claims. Further preferred embodiments are evident from the dependent patent claims.

According to the invention, every network message configured for transmission from a sender to a receiver IED across an Ethernet switch-based communication network of a PC or SA system is evaluated, and a graphical representation respective of process related operational aspects of each IED involved is generated and displayed. From a logical data flow description that is part of a formal configuration representation of the PC or SA system, sender and receiver IEDs are retrieved or determined. Each IED being assignable, in an unambiguous way, a single one out of a plurality of operational aspects related to the operation of the controlled process or automated substation, such characterizing operational aspect is likewise retrieved, for each IED, from the formal configuration description. Generating the graphical representation of the system includes forming groups of IEDs with identical operational aspects. For each group of IEDs, the respective operational aspect is indicated or displayed, in the form of a label or tag, along with, or otherwise linked to, the group. As a consequence, a user may easily analyse the communication configuration of the system by looking at the generated graphical representation and determine, at a single glance, the consequences of IED failures or engineering errors on other IEDs and/or on the controlled and protected process. Hence, diagnosing of communication problems is facilitated both at a system design or engineering stage and in the running system.

In a first preferred variant of the invention, the operational aspects comprise a hierarchically lowest functional level as e.g. specified in the IEC 61850-6 Substation Description for SA systems. Alternatively a hierarchically lowest geographical indication corresponding to an area or site, or any other hierarchical structure can be used. On the other hand, purely communication-inherent aspects, such as the definition of Virtual Local Area Networks restricting the multicast data flow within the communication network of the control or automation system, do not qualify as operational aspects related to the operation of the controlled process or automated substation.

In a second preferred variant of the invention, at least one of the IEDs is composed of, or hosts, a plurality of Logical Devices LDs in terms of IEC 61850, which in turn comprise a number of Logical Nodes and which are assignable to an unambiguous operational aspect. Hence, in the graphical representation, LDs are depicted as the independent building blocks for the purpose of communication configuration, despite the fact that several LDs may actually be hosted by one and the same IED or otherwise share a particular operational aspect. By way of example, a protection and a control function in a bay may be assigned to two different LDs of a single bay IED.

In a further preferred variant, the network messages relating to a specific data flow or IED function include data or payload information according to a data set definition. This definition is likewise retrieved from the formal configuration representation, and used to code, in the graphical representation, the messages or the corresponding data flow, respectively. For instance, such coding may include a colour or other format, style or thickness of a line or connector representing the specific data flow between two IEDs. Likewise, a tag including the retrieved information may be appended to and displayed in the vicinity of the line. Advantageously, the line or connector, or the tag appended thereto, is used to access the data set definition, i.e. the actually communicated data objects.

The present invention also relates to a computer program product including computer program code for controlling one or more processors of an engineering tool or other device adapted to be connected to a communication network of an SA or PC system and configured to store a formal configuration representation of the SA or PC system, particularly, a computer program product including a computer readable medium containing therein the computer program code.

### BRIEF DESCRIPTION OF THE DRAWINGS

The subject matter of the invention will be explained in more detail in the following text with reference to preferred exemplary embodiments which are illustrated in the attached drawings, of which:
Fig.1 is an exemplary graphical representation of a logical data flow, and
Fig.2 is an excerpt of an SCL file with a formal configuration description of an IED.

### DETAILED DESCRIPTION OF PREFERRED EMBODIMENTS

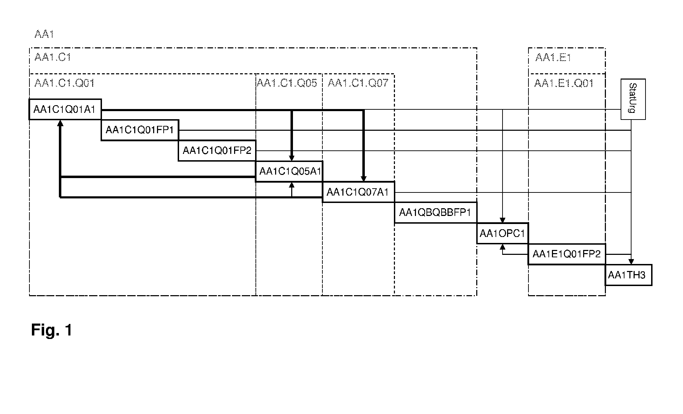

Fig.1 is an exemplary graphical representation showing the complete configured communication or logical data flow between Intelligent Electronic Devices (IEDs) of an exemplary Substation Automation (SA) system. The arrangement of the IEDs as the objects exchanging data in Fig.1 is structured according to a substation hierarchy as a specific operational aspect. In parallel, in the upper part of the diagram the hierarchical substation structure is indicated, ranging from substation level AA1 at the top to voltage level C1 and further to bay level with three bays Q01, Q05 and Q07. This arrangement enables a user to see at one glance the dependencies between the IEDs as well as their relation to the controlled or monitored process. At the top of the diagram some structured boxes show the substation section hierarchy. It starts with the substation AA1.

In detail, substation "AA1" comprises a voltage level "C1" of e.g. 380 kV, to which in turn six IEDs are assigned. The first three IEDs "AA1C1Q01A1", "AA1C1Q01FP1", "AA1C1Q01FP2" serve bay Q01, whereas the IEDs "AA1C1Q05A1" and "AA1C1Q07A1" are assigned to bay Q05 and Q07 as respective bay controllers. In the example shown, the assigned bay (Q01, Q05, and Q07) as a hierarchically lowest functional level of each IED is the specific operational aspect that has been chosen for the graphical representation. The sixth IED "AA1QBQBBFP1" for the bus bar protection is not assigned to a specific one of the aforementioned bays, however to the full protected voltage level. Furthermore, station-level IEDs such as OPC server "AA10PC1" and RTU "AA1TH3" are also represented, although not allocated to the substation level as they might have to serve several substations as well. Finally, IED "AA1E1Q01FP2" is the sole IED assigned to bay Q01 of voltage level E1.

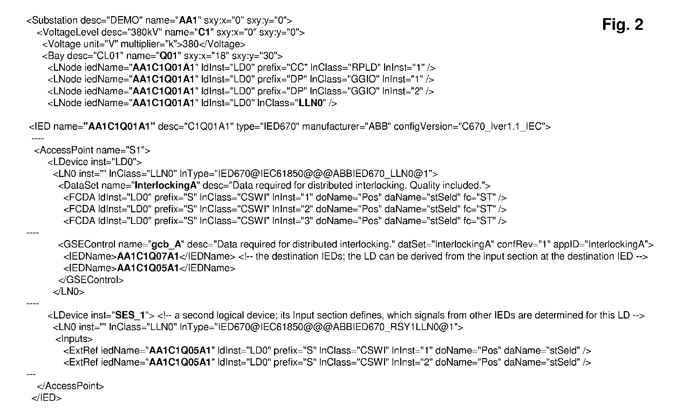

Fig.2 lists excerpts of a Substation Configuration Description SCD according to IEC 61850 that corresponds to the SA system referred to in Fig.1 The SCD specifies in the IED section for each control block the receiver IEDs, i.e. the logical data flow is described at least at IED level, possibly down to Logical Node level. Additionally the Substation section contains the relation of the Logical Nodes to the parts and functions of the switch yard. Based on this information, an IED, or a Logical Device LD as a virtual IED, may be allocated to that functional level which comprises all its Logical Nodes.

In detail, the top paragraph of Fig.2 is part of the substation section and lists a number of Logical Nodes pertaining to and configured on IED "AA1C1Q01A1" which in turn is assigned to bay "Q01" of voltage level "C1" of substation "AA1" (bold-type emphasis added for the sake of legibility). The remaining paragraphs of Fig.2 are part of the IED section and define, still for IED "AA1C1Q01A1" and assigned to a Logical Device "LD0", the data set "InterlockingA" for distributed interlocking, and the data flow related to distributed interlocking, with IED "AA1C1Q01A1" as a source for respective GOOSE messages (e.g. "gcb_A" to IEDs "AA1C1Q07A1" and "AA1C1QOSA1"). A second Logical Device "SES_1" with an input section defining which signals from other IEDs (e.g. IED "AA1C1QOSA1") are determined for this IED "AA1C1Q01A1" as a sink.

Fig.1 depicts a set of communicating objects (IEDs or Logical Devices or even Logical Nodes) arranged in groups along the diagonal of a matrix. The data flow at data set / control block level is shown as arrows going horizontal from the sender IED to the receiver IED column, and then vertical within the column to the receiver IED. At the corner point the data set (defining the message content) or control block (defining the way of sending, including performance quality) names may be shown. Depending on the data set or control block type the arrow might be drawn in a different colour, e.g. yellow for unbuffered reporting, and green for GOOSE messages. For instance, the abovementioned data flow between the IEDs in bays Q01, Q05, and Q07 and related to interlocking is displayed in bold-type. Additionally, for reporting messages to AA10PC and AA1TH3 the data set name "StatUrg" is indicated at an exemplary corner point between sender and receiver. Finally, by clicking on a particular arrow or other related graphical (hyper-) link, a list of the exchanged data sets together with the data set definitions for the message contents may appear. Graphically linking the data set specification to the represented data flow enables a user to easily display or produce the data flow contents, including the connection to the LNs within the LDs of the IEDs.

The proposed representation is the basis for all further evaluations such as analyzing effects caused by IED failures, or filtering out the interesting system part from application or communication point of view. In particular, the effects of an IED failure on dependent IEDs as well as on the related process part can be identified visually by a user. Failure traceability can be further enhanced by highlighting a failed IED and its data e.g. in another colour either from an online error status, or manually by clicking onto the IED. Singular IEDs that do not act as message sink or source might hint onto unfinished engineering. To provide a better overview in extensive automation systems, the representation is enhanced with different filter functions e.g. according to substation parts, IED name parts, data set (application) name parts, or communication sub networks.

## Claims

1. A method of facilitating an analysis of a communication configuration of a Process Control system with a plurality of Intelligent Electronic Devices IEDs connected to a communication network for controlling an industrial process comprising a plurality of operational aspects, and in particular of a Substation Automation system controlling an electric power substation, wherein sender IEDs are configured to send different messages to different predetermined receiver IEDs, comprising
- retrieving, for each sender IED of the plurality of IEDs and for each message configured to be transmitted by said sender IED, from a formal configuration representation of the PC system, the receiver IEDs for which the message is destined,
- retrieving, for each sender IED and for each receiver IED, an unambiguous IED-specific operational aspect from the formal configuration representation of the PC system,
- generating a graphical representation of the sender and receiver IEDs as well as of the messages configured to be transmitted from the sender to the receiver IEDs, including grouping the IEDs according to the operational aspects retrieved and indicating, for each group of IEDs, the respective operational aspect, and
- displaying this representation for analysis by a user.

2. The method according to claim 1, **characterized in that** it comprises
- retrieving a hierarchically lowest functional level or geographical indication to which the IED is assigned as the operational aspect of the IED.

3. The method according to claim 1, wherein a sender or receiver IED comprises several Logical Nodes LNs according to IEC 61850, **characterized in that** it comprises
- grouping the Logical Nodes into Logical Devices LDs with unambiguous operational aspects, and
- representing the Logical Devices of the sender or receiver IED in the generated graphical representation.

4. The method according to claim 1, **characterized in that** it comprises
- retrieving, for each message configured to be transmitted, from the formal configuration representation of the PC system, a data set specification, and
- representing, in the generated graphical representation, a data flow involving a message based on the retrieved data set specification of the message.

5. The method according to claim 4, **characterized in that** it comprises
- graphically linking the data set specification to the represented data flow, such as to enable a user to display the data flow contents.

6. The method according to claim 1, **characterized in that** it comprises, prior to generating a graphical representation of the sender and receiver IEDs,
- filtering the plurality of IEDs according to a user preference.

7. An engineering tool for Process Control PC systems with a plurality of Intelligent Electronic Devices IEDs connected to a communication network for controlling an industrial process comprising a plurality of operational aspects, and in particular for a Substation Automation system controlling an electric power substation, with a sender IED sending different messages to different predetermined receiver IEDs, adapted to
- retrieve, for each sender IED of the plurality of IEDs and for each message configured to be transmitted by said sender IED, from a formal configuration representation of the PC system, the receiver IEDs for which the message is destined,
- retrieve, for each sender IED and for each receiver IED, an unambiguous IED-specific operational aspect from the formal configuration representation of the PC system,
- generate a graphical representation of the sender and receiver IEDs as well as of the messages configured to be transmitted from the sender to the receiver IEDs, including grouping the IEDs according to the operational aspects retrieved and indicating, for each group of IEDs, the respective operational aspect, and
- display this representation for analysis by a user.
